# EUROPÄISCHE PATENTSCHRIFT

(11) **EP 2 241 139 B1**
(45) Veröffentlichungstag und Bekanntmachung des Hinweises auf die Patenterteilung: **14.12.2011**
(21) Anmeldenummer: 08868460.0
(22) Anmeldetag: 30.10.2008
(51) Int. Cl.: H04W 48/20

(54) **VERFAHREN FÜR EINE EFFIZIENTERE SUCHE NACH FUNKNETZZUGANGSPUNKTEN FÜR GESCHLOSSENE GRUPPEN IN RADIOZUGANGSNETZEN**
METHOD FOR A MORE EFFICIENT SEARCH FOR RADIO NETWORK ACCESS POINTS FOR CLOSED GROUPS IN RADIO ACCESS NETWORKS
PROCÉDÉ DE RECHERCHE EFFICACE DE POINTS D'ACCÈS À UN RÉSEAU DE RADIOCOMMUNICATION POUR DES GROUPES FERMÉS DANS DES RÉSEAUX D'ACCÈS RADIO

(30) Priorität: 21.12.2007 DE 102007062840
(43) Veröffentlichungstag der Anmeldung: 20.10.2010
(73) Patentinhaber: Deutsche Telekom AG, 53113 Bonn (DE)
(72) Erfinder: SPEICHER, Sebastian, 53225 Bonn (DE); NENNER, Karl-Heinz, 53332 Bornheim (DE)
(86) Internationale Anmeldenummer: PCT/EP2008/009156
(87) Internationale Veröffentlichungsnummer: WO 2009/083058

(56) Entgegenhaltungen:
- WO-A-00/35230
- WO-A-00/42779
- WO-A-2006/100653
- GB-A- 2 369 004
- "Universal Mobile Telecommunications System (UMTS); Evolved Universal Terrestrial Radio Access (E-UTRA) and Evolved Universal Terrestrial Radio Access (E-UTRAN); Overall description; Stage 2 (3GPP TS 36.300 version 8.2.0 Release 8); ETSI TS 136 300" ETSI STANDARDS, LIS, SOPHIA ANTIPOLIS CEDEX, FRANCE, Bd. 3-R2, Nr. V8.2.0, 1. Oktober 2007 (2007-10-01), XP014040285 ISSN: 0000-0001

## Beschreibung

Die Erfindung betrifft ein Verfahren zur Identifikation von Zugangspunkten für eine geschlossene Gruppe von Mobilfunkendgeräten zu einem zellularen Mobilfunknetz, bei dem die Nutzung dieser Zugangspunkte nur für die geschlossene Gruppe von Mobilfunkendgeräten freigegeben ist, wobei seitens einer Zelle, die einen solchen Zugangspunkt bildet, Daten von Nachbarzellen an ein in dieser Zelle in das Mobilfunknetz eingebuchtes Mobilfunkendgerät übermittelt werden und/oder seitens des in dieser Zelle in das Mobilfunknetz eingebuchten Mobilfunkendgeräts eine Suche nach momentan empfangbaren Nachbarzellen durchgeführt wird.

Ein Verfahren dieser Art ist aus der Veröffentlichung der internationalen Patentanmeldung WO 00/35230 A2 bekannt. Sie beschreibt, wie ein sogenannter Handover eines Mobilfunkendgeräts von einer Zelle eines privaten Netzwerks zu einer Zelle eines öffentlichen Netzwerks und umgekehrt unter Verwendung von ausgesendeten Nachbarschaftsinformationen stattfinden kann, die von dem Mobilfunkendgerät empfangen werden.

Standardisierte Mechanismen zur Funkverbindungszuweisung verhindern einen unkontrollierten Zugang zu ausgewählten Funknetzzugangspunkten für geschlossene Gruppen (engl. Closed Subscriber Group - CSG), d.h. nur Mitglieder der geschlossenen Gruppe (im folgenden auch als CSG bezeichnet) sind berechtigt, den bzw. die assoziierten Funknetzzugangspunkt(e), d.h. geeignete Zellen, die als Zugangspunkt für die geschlossene Gruppe (CSG) dienen können, im folgenden CSG Zelle/n genannt, zu nutzen. Die Erlaubnis, eine CSG Zelle zu nutzen, ergibt sich aus der Subskription und wird im Mobilfunkendgerät und/oder dem Subscriber Identity Module (SIM) gespeichert.

Stand der Technik ist weiterhin, dass Mobilfunkendgeräte die Suche nach derartigen CSG Zellen autonom durchführen. Hierbei können - falls verfügbar - durch Makrozellen ausgestrahlte Informationen (so genannte Nachbarschaftslisten) über benachbarte CSG Zellen genutzt werden. Ggf. wird weiterhin die Suche auf die die CSG Zelle umgebende Region (z.B. durch die Location/Routing/Tracking Area definiert) beschränkt.

Der beschriebene Ansatz, dass Makrozellen Informationen über benachbarte CSG Zellen ausstrahlen und das Mobilfunkendgerät diese als Basis für die Suche nach verfügbaren CSG Zellen verwendet, bedeutet- besonders im Fall einer größeren Anzahl geeigneter Zellen, d.h. CSG Zellen, im Netz - einen immensen operativen Aufwand, weil die entsprechenden Nachbarschaftsbeziehungen permanent zu pflegen sind. Ferner würde die erforderliche Zahl der CSG Zellen schnell die technisch mögliche Anzahl der Nachbarzellbeziehungen überschreiten, die eine Makrozelle ausstrahlen kann. Weiterhin ist dieser Ansatz nicht möglich, wenn Netzkunden eine CSG Zelle autonom, also ohne unmittelbare Beteiligung des Netzbetreibers, beschaffen und installieren können.

Darüber hinaus ist an diesem Ansatz seine Ungenauigkeit problematisch. Da Makro-Funknetzzugangspunkte über eine sehr große Reichweite verfügen können, wird die Suche mit hoher Wahrscheinlichkeit ausgelöst, obwohl noch keine geeignete CSG Zelle in Reichweite des Mobilfunkendgeräts ist. In diesem Fall besteht bisher nur die Möglichkeit, die Suche in bestimmten Zeitabständen periodisch zu wiederholen. Dies führt jedoch bei kurz gewähltem Zeitabstand zu hohem Energiebedarf (durch die häufigen Suchvorgänge) und bei lang gewähltem Zeitabstand zu einer - aus Nutzersicht inakzeptablen - Verzögerung bis zum tatsächlichen Entdecken einer vorhandenen und geeigneten CSG Zelle.

Die Beschränkung der Suche auf die die CSG Zelle umgebende Region kann das vorgenannte Problem der Ungenauigkeit nicht lösen, da die Definition der Region mehrere bis viele Makrozellen umfasst. Es kann so nur verhindert werden, dass das Endgerät immer nach der CSG Zelle sucht, obwohl es sich außerhalb der umgebenden Region und somit sicher außerhalb des Empfangsbereichs der CSG Zelle befindet. Ohnehin ist eine Pflege der Beziehungen zwischen Region und CSG Zelle durch den Netzbetreiber technisch bzw. administrativ nicht mehr möglich, soweit der o.g. Sachverhalt besteht, dass sich eine große Anzahl von CSG Zellen im Netz befindet und/oder die Netzkunden autonom CSG Zellen in Betrieb nehmen können.

Die Aufgabe der Erfindung ist es, ein Verfahren zur Verfügung zu stellen, welches die genannten Nachteile des Standes der Technik überwindet und einen verbessertem Mechanismus zum Auslösen eines Suchvorgangs nach einer geeigneten CSG Zelle seitens des Mobilfunkendgeräts bereitstellt.

Diese Aufgabe wird erfindungsgemäß durch ein Verfahren gemäß Anspruch 1 gelöst. Weitere vorteilhafte Ausgestaltungen der Erfindung sind in den Unteransprüchen angegeben.

Besonders vorteilhaft ist bei dem Verfahren zur Identifikation von Zugangspunkten für eine geschlossene Gruppe von Mobilfunkendgeräten zu einem zellularen Mobilfunknetz, bei dem die Nutzung dieser Zugangspunkte nur für die geschlossene Gruppe von Mobilfunkendgeräten freigegeben ist, wobei seitens einer Zelle, die einen solchen Zugangspunkt bildet, Daten von Nachbarzellen an ein in dieser Zelle in das Mobilfunknetz eingebuchtes Mobilfunkendgerät übermittelt werden und/oder seitens des in dieser Zelle in das Mobilfunknetz eingebuchten Mobilfunkendgeräts eine Suche nach momentan empfangbarer Nachbarzellen durchgeführt wird,
- dass die Daten der übermittelten und/ oder empfangenen Nachbarzellen für eine Suche nach dem Zugangspunkt zumindest temporär in dem Mobilfunkendgerät gespeichert werden, und
- dass eine Suche nach als Zugangspunkt für die geschlossene Gruppe geeigneten Zellen nur ausgelöst wird, wenn sich das Mobilfunkendgerät in Reichweite einer oder mehrerer der abgespeicherten Nachbarzellen eines Zugangspunktes für eine geschlossene Gruppe befindet,
- dass, falls der Zugangspunkt für die geschlossene Gruppe nicht gefunden wurde, eine erneute Suche nach dem Zugangspunkt durch das Mobilfunkendgerät durchgeführt wird, wenn sich innerhalb der Reichweite der Nachbarzellen des Zugangspunktes die geografische Position des Mobilfunkendgerätes zu einer vorherigen Position signifikant geändert hat.
Der neue erfindungsgemäße Ansatz besteht aus einem verbessertem Mechanismus bzw. Verfahren zum Auslösen eines Suchvorgangs nach einer geeigneten CSG Zelle seitens des Mobilfunkendgeräts.

Dieses Verfahren basiert ebenfalls auf der Grundidee der Nutzung von Nachbarschaftsinformationen. So ist eine Suche nach geeigneten CSG Zellen, d.h. solchen Zellen, die empfangbar sind und als Zugangspunkt zu dem Mobilfunknetz für die geschlossene Gruppe dienen können, durchzuführen, wenn sich das Mobilfunkendgerät in Reichweite einer/mehrerer dem Mobilfunkendgerät als Nachbar der CSG Zelle bekannten Makrozelle(n) befindet.

Der Unterschied zum Stand der Technik und der besondere Vorteil des erfindungsgemäßen Verfahrens ist jedoch (a) wie das Mobilfunkendgerät diese Nachbarschaftsbeziehungen der geeigneten CSG Zellen lernt, (b) dass die Ungenauigkeit der Nachbarzellliste hinsichtlich des Empfangsbereiches der CSG Zelle deutlich verringert wird, und (c), dass nach einem erfolglosen Suchversuch eine erneute Suche durchgeführt wird, sobald sich die Position des Mobilfunkendgeräts signifikant geändert hat, es sich jedoch noch innerhalb der Reichweite der Nachbarzellen des Zugangspunktes befindet.

Befindet sich das Mobilfunkendgerät jedoch außerhalb der Reichweite der bekannten Nachbarzellen des Zugangspunktes, d.h. an einem beliebigen entfernten Ort innerhalb des Mobilfunknetzes, so erübrigt sich eine Suche nach dem Zugangspunkt. Mit anderen Worten, eine Suche nach dem Zugangspunkt für die geschlossene Gruppe, beispielsweise eine sogenannte Home Basis Station, wird immer nur dann angestoßen, wenn überhaupt die Möglichkeit besteht, dass sich das Mobilfunkendgerät der geschlossenen Gruppe in Reichweite dieses Zugangspunktes befindet.

Mit dem Begriff der geeigneten CSG Zelle ist dabei eine solche Zelle des Mobilfunknetzes bezeichnet, welche der geschlossenen Gruppe von Mobilfunkendgeräten als Zugangspunkt zu dem Mobilfunknetz dienen kann, d.h. dass es in diesen geeigneten Zellen den zu der geschlossenen Gruppe (CSG) gehörenden Mobilfunkendgeräten möglich ist, sich in das Mobilfunknetz einzubuchen und Mobilfunkverbindungen aufzubauen und zu halten, d.h. z.B. den Aufbau von Mobilfunkverbindungen aktiv auszulösen (Rufaufbau) oder einen Anruf anzunehmen (Rufannahme) bzw. Datenverbindungen aufzubauen und/oder zu halten.

Die Erfassung der Daten von Nachbarzellen geeigneter CSG Zellen erfolgt alternativ oder kumulativ dadurch, dass seitens einer Zelle, die eine geeignete CSG Zelle bildet, die Daten von Nachbarzellen an ein in dieser Zelle in das Mobilfunknetz eingebuchtes Mobilfunkendgerät übermittelt werden und/oder dass seitens eines in dieser Zelle in das Mobilfunknetz eingebuchten Mobilfunkendgeräts eine Suche nach momentan empfangbaren Nachbarzellen durchgeführt wird.

Bei einer geeigneten Nachbarzelle kann es sich dabei ebenfalls um eine CSG-Zelle, d.h. eine Zelle, die nur für eine geschlossene Gruppe freigegeben ist, handeln, oder aber auch um eine Makrozelle des zellularen Mobilfunknetzes handeln, d.h. eine Zelle, die den Nutzern des Mobilfunknetzes generell zur Verfügung steht.

Eine Suche seitens des Mobilfunkendgerätes kann somit insbesondere dann ausgelöst werden, wenn eine vorherige Suche erfolglos war, jedoch zwischenzeitlich eine signifikante Positionsänderung des Mobilfunkendgerätes erfolgt ist und daher die Möglichkeit besteht, wieder in Reichweite eine geeigneten CSG-Zelle oder öffentlichen Zelle gelangt zu sein.

Für das Erlernen oder Erfassen der Nachbarschaftsbeziehungen bestehen somit zwei alternativ oder kumulativ anzuwendende Möglichkeiten:
1) Das Mobilfunkendgerät befindet sich in der CSG Zelle, und diese kennt die benachbarten Makrozellen (z.B. auf Basis eines eigenen Scans der Umgebung). In diesem Fall kann die CSG Zelle diese Information an das Mobilfunkendgerät übermitteln, beispielsweise durch den Broadcastkanal oder alternativ durch dedizierte Signalisierung, d.h. dass die Daten von Nachbarzellen seitens der CSG Zelle, in der sich das Mobilfunkendgerät befindet und in der es in das Mobilfunknetz eingebucht ist, an das Mobilfunkendgerät, welches zu der geschlossenen Gruppe gehört, übermittelt werden.
2) Das Mobilfunkendgerät ermittelt durch eine Zellsuche (z.B. die zyklisch stattfindende Hintergrundsuche) die momentan empfangbaren Makrozellen und speichert alle diese Zellen, solange die CSG Zelle, d.h. die aktuelle und als Zugangspunkt dienende Zelle, ebenfalls empfangbar ist, als Nachbarn.

Mit einer derartigen Nachbarzellliste wird der geografische Bereich für eine CSG Zellsuche, d.h. für eine Suche nach für die geschlossene Gruppe als Zugangspunkt zu dem Mobilfunknetz geeigneten Zellen deutlich genauer bestimmt, so dass sich die Wahrscheinlichkeit einer erfolglosen Suche - und damit einhergehend die Suchhäufigkeit - deutlich verringert.

Vorzugsweise wird seitens einer CSG Zelle eine Suche nach empfangbaren Nachbarzellen durchgeführt, insbesondere in festlegbaren zeitlichen Abständen wiederholt durchgeführt, und die Daten dieser empfangbaren Nachbarzellen werden an in der Zelle eingebuchte Mobilfunkendgeräte der geschlossenen Gruppe übermittelt.

Alternativ oder kumulativ wird in einer bevorzugten Ausführungsform des Verfahrens seitens eines Mobilfunkendgerätes der geschlossenen Gruppe, solange es über eine geeignete CSG Zelle in das Mobilfunknetz eingebucht ist, eine Suche nach empfangbaren Nachbarzellen in festlegbaren zeitlichen Abständen wiederholt durchgeführt, und die momentan empfangbaren Nachbarzellen werden zumindest temporär als Nachbarzellen in dem Mobilfunkendgerät gespeichert.

Eine Positionsveränderung des Mobilfunkendgeräts kann insbesondere mit einer der folgenden Methoden festgestellt werden:
Vorzugsweise wird eine signifikante geografische Positionsänderung des Mobilfunkendgerätes dadurch festgestellt, dass eine Änderung eines dem Mobilfunkendgerät von dem Zugangspunkt zugeteilten Timing-Advance-Wertes eines Zeitmultiplexverfahrens einen festlegbaren Wert erreicht oder überschreitet, insbesondere innerhalb einer festlegbaren Zeitspanne erreicht oder überschreitet.

Falls das Mobilfunknetz Zeitmultiplexverfahren nutzt, wird jedem Mobilfunkendgerät ein Timing-Advance-Wert mitgeteilt. Dieser beschreibt die Zeit, um welche Aussendungen des Mobilfunkendgeräts zeitlich vorgezogen werden sollen, um Ausbreitungsverzögerungen auf Grund der Entfernung zwischen Mobilfunkendgerät und Funknetzzugangspunkt auszugleichen. Der Timing-Advance-Wert wird entsprechend angepasst, wenn sich diese Entfernung / Ausbreitungsverzögerung ändert.

Basierend darauf ist erfindungsgemäß eine erneute Suche nach geeigneten CSG Zellen insbesondere dann durchzuführen, wenn sich der dem Mobilfunkendgerät zugeteilte Timing-Advance-Wert um einen vordefinierten oder dynamisch ermittelten relativen oder absoluten Wert insbesondere innerhalb eines vordefinierten Zeitintervalls ändert. Als Auslösekriterium kann somit ein festlegbarer Absolutwert und/oder ein Gradient des Timing-Advance-Wertes dienen.

Zusätzlich und/oder alternativ kann auch eine periodische Suche nach geeigneten CSG Zellen durchgeführt werden, jedoch insbesondere - solange sich der Timing-Advance-Wert nicht wie oben beschrieben ändert - mit einem größeren zeitlichen Abstand zwischen den einzelnen Suchvorgängen.

Alternativ oder kumulativ kann eine signifikante geografische Positionsänderung des Mobilfunkendgerätes dadurch festgestellt werden, dass eine Änderung der absoluten oder relativen Lage (bezogen auf die Rahmenstruktur) von Rundstrahlinformationen empfangbarer Zellen einen festlegbaren Wert erreicht oder überschreitet, insbesondere innerhalb einer festlegbaren Zeitspanne erreicht oder überschreitet. Mobilfunkgeräte empfangen laufend Rundstrahlinformationen von Funkzellen in Reichweite. Diese Informationen muss das Endgerät regelmäßig dekodieren. Damit dies gelingt, muss sich das Endgerät auf die Rahmenstruktur (Link Layer) des Rundstrahlsignals synchronisieren, wobei sich die zeitliche Lage der Rahmen - bezogen auf den Zeitpunkt der Aussendung durch die Zelle - aus der Laufzeit des Signals zum Endgerät, und somit der Entfernung zwischen Zelle und Endgerät, ergibt. Für den Fall, dass sich das Endgerät auf die Zelle zu oder von ihr weg bewegt, muss die Synchronisationsinformation entsprechend nachgeführt werden.

Basierend darauf ist erfindungsgemäß eine erneute Suche nach geeigneten CSG Zellen insbesondere dann durchzuführen, wenn sich die Synchronisationsinformation bzgl. der Rahmen einer oder mehrerer Makrozellen um einen vordefinierten oder dynamisch ermittelten relativen oder absoluten Wert innerhalb eines vordefinierten Zeitintervalls ändert.

Zusätzlich und/oder alternativ kann auch weiterhin eine periodische Suche nach geeigneten CSG Cells durchgeführt werden, jedoch insbesondere - solange sich die Synchronisationsinformation nicht wie oben beschrieben ändert - mit einem größeren zeitlichen Abstand zwischen den einzelnen Suchvorgängen.

Alternativ können statt der Änderungen der Synchronisationsinformation auch Änderungen der relativen Lage der Rahmen von mehreren Makrozellen untereinander herangezogen werden.

Als Auslösekriterium kann somit auch ein festlegbarer Absolutwert und/oder ein Gradient der Synchronisationsinformation oder der relativen Lage der Rahmen (Link Layer) zueinander dienen.

Alternativ oder kumulativ zu den vorgenannten Möglichkeiten der Feststellung einer im Sinne der Erfindung signifikanten Positionsänderung des Mobilfunkendgerätes, durch die eine Suche nach als Zugangspunkt für die geschlossene Gruppe geeigneten Zellen durch das Mobilfunkendgerät ausgelöst wird, kann eine signifikante geografische Positionsänderung des Mobilfunkendgerätes dadurch festgestellt werden, dass eine Änderung des Empfangspegels und/oder der Empfangsqualität einer oder mehrerer empfangbarer Zellen einen festlegbaren Wert erreicht oder überschreitet, insbesondere innerhalb einer festlegbaren Zeitspanne erreicht oder überschreitet.

Mobilfunkendgeräte messen regelmäßig die Eigenschaften des von empfangbaren Makro-Funknetzzugangspunkten empfangenen Signals (z.B. Empfangspegel und/oder -qualität).

Erfindungsgemäß ist insbesondere dann eine erneute Suche nach geeigneten CSG Zellen durchzuführen, wenn sich die Eigenschaften des gemessenen Signal eines oder mehrerer vordefinierter Makro-Funknetzzugangspunkte um einen vordefinierten oder dynamisch ermittelten relativen oder absoluten Wert innerhalb eines vordefinierten Zeitintervalls ändern.

Als Auslösekriterium kann somit auch ein festlegbarer Absolutwert und/oder ein Gradient der Empfangsqualität und/oder des Empfangspegels des Funksignals von Nachbarzellen dienen.

Eine Suche nach geeigneten CSG Zellen kann auch dann durchzuführen sein, d.h. ausgelöst werden, sobald eine oder mehrere der genannten Auslösebedingungen eintritt, da diese auch parallel überwacht und ausgewertet werden können.

## Patentansprüche

1. Verfahren zur Identifikation von Zugangspunkten für eine geschlossene Gruppe von Mobilfunkendgeräten zu einem zellularen Mobilfunknetz, bei dem die Nutzung dieser Zugangspunkte nur für die geschlossene Gruppe von Mobilfunkendgeräten freigegeben ist, wobei seitens einer Zelle, die einen solchen Zugangspunkt bildet, Daten von Nachbarzellen an ein in dieser Zelle in das Mobilfunknetz eingebuchtes Mobilfunkendgerät übermittelt werden und/oder seitens des in dieser Zelle in das Mobilfunknetz eingebuchten Mobilfunkendgeräts eine Suche nach momentan empfangbaren Nachbarzellen durchgeführt wird, **dadurch gekennzeichnet,**
• **dass** die Daten der übermittelten und/ oder empfangenen Nachbarzellen für eine Suche nach dem Zugangspunkt zumindest temporär in dem Mobilfunkendgerät gespeichert werden, und
• **dass** eine Suche nach dem Zugangspunkt für die geschlossene Gruppe nur ausgelöst wird, wenn sich das Mobilfunkendgerät in Reichweite einer oder mehrerer der abgespeicherten Nachbarzellen des Zugangspunktes für die geschlossene Gruppe befindet,
• **dass**, falls der Zugangspunkt für die geschlossene Gruppe nicht gefunden wurde, eine erneute Suche nach dem Zugangspunkt durch das Mobilfunkendgerät durchgeführt wird, wenn sich innerhalb der Reichweite der Nachbarzellen des Zugangspunktes die geografische Position des Mobilfunkendgerätes zu einer vorherigen Position signifikant geändert hat.

2. Verfahren nach Anspruch 1, **dadurch gekennzeichnet, dass** seitens einer Zelle eine Suche nach empfangbaren geeigneten Nachbarzellen durchgeführt wird, insbesondere in festlegbaren zeitlichen Abständen wiederholt durchgeführt wird, und die Daten dieser empfangbarer geeigneter Nachbarzellen an in der Zelle eingebuchte Mobilfunkendgeräte der geschlossenen Gruppe übermittelt werden.

3. Verfahren nach Anspruch 1 oder 2, **dadurch gekennzeichnet, dass** seitens eines Mobilfunkendgerätes der geschlossenen Gruppe eine Suche nach empfangbaren und geeigneten Nachbarzellen in festlegbaren zeitlichen Abständen wiederholt durchgeführt wird, und die momentan empfangbaren geeigneten Zellen zumindest temporär als Nachbarzellen in dem Mobilfunkendgerät gespeichert werden.

4. Verfahren nach einem der vorherigen Ansprüche, **dadurch gekennzeichnet, dass** eine signifikante geografische Positionsänderung des Mobilfunkendgerätes dadurch festgestellt wird, dass eine Änderung eines dem Mobilfunkendgerät von dem Zugangspunkt zugeteilten Timing-Advance-Wertes eines Zeitmultiplexverfahrens einen festlegbaren Wert erreicht oder überschreitet, insbesondere innerhalb einer festlegbaren Zeitspanne erreicht oder überschreitet.

5. Verfahren nach einem der vorherigen Ansprüche, **dadurch gekennzeichnet, dass** eine signifikante geografische Positionsänderung des Mobilfunkendgerätes dadurch festgestellt wird, dass eine Änderung der absoluten oder relativen Lage bezogen auf die Rahmenstruktur von Rundstrahlinformationen empfangbarer Zellen einen festlegbaren Wert erreicht oder überschreitet, insbesondere innerhalb einer festlegbaren Zeitspanne erreicht oder überschreitet.

6. Verfahren nach einem der vorherigen Ansprüche, **dadurch gekennzeichnet, dass** eine signifikante geografische Positionsänderung des Mobilfunkendgerätes dadurch festgestellt wird, dass eine Änderung des Empfangspegels und/oder ein entsprechender gemittelter Wert des Empfangspegels und/oder der Qualität des empfangenen Signals und/oder ein entsprechender gemittelter Wert der Qualität des empfangenen Signals einer oder mehrerer empfangbarer Zellen einen festlegbaren Wert erreicht oder überschreitet, insbesondere innerhalb einer festlegbaren Zeitspanne erreicht oder überschreitet.

## Claims

1. Method for identification of access points for a closed group of mobile radio terminals to a cellular mobile radio network, in which the use of these access points is only permitted for the closed group of mobile radio terminals, wherein data from neighboring cells are transmitted by a cell that constitutes such an access point to a mobile radio terminal registered in the mobile radio network in this cell, and/or a search for neighboring cells that are currently receivable is performed by the mobile radio terminal registered in this cell in the mobile radio network, **characterized in that**
• the data for the transmitted and/or received neighboring cells are stored at least temporarily in the mobile radio terminal for a search for the access point, and
• **in that** a search for the access point for the closed group is only triggered when the mobile radio terminal is within range of one or more of the stored neighboring cells of the access point for the closed group,
• **in that**, in the event that the access point for the closed group was not found, a new search for the access point is performed by the mobile radio terminal if the geographic position of the mobile radio terminal within the range of the neighboring cells of the access point has changed significantly relative to a previous position.

2. Method according to claim 1, **characterized in that** a search for receivable, suitable neighboring cells is performed by a cell, in particular is performed repeatedly at predefinable time intervals, and the data of these receivable, suitable neighboring cells are transmitted to mobile radio terminals of the closed group registered in the cell.

3. Method according to claim 1 or 2, **characterized in that** a search for receivable and suitable neighboring cells is performed repeatedly at predefinable time intervals by a mobile radio terminal of the closed group, and the currently receivable, suitable cells are stored at least temporarily in the mobile radio terminal as neighboring cells.

4. Method according to any one of the preceding claims, **characterized in that** a significant change in the geographic position of the mobile radio terminal is identified by the means that a change in a timing advance value of a time multiplexing method allocated to the mobile radio terminal by the access point reaches or exceeds a predefinable value, in particular within a predefinable time period.

5. Method according to any one of the preceding claims, **characterized in that** a significant change in the geographic position of the mobile radio terminal is identified by the means that a change in the absolute or relative position with respect to the frame structure of broadcast information from receivable cells reaches or exceeds a predefinable value, in particular within a predefinable time period.

6. Method according to any one of the preceding claims, **characterized in that** a significant change in the geographic position of the mobile radio terminal is identified by the means that a change in the receive level and/or an appropriately averaged value of the receive level and/or the quality of the received signal and/or an appropriately averaged value of the quality of the received signal of one or more receivable cells reaches or exceeds a predefinable value, in particular within a predefinable time period.

## Revendications

1. Procédé d'identification de points d'accès pour un groupe fermé de terminaux de radiocommunication mobile à un réseau de radiocommunication cellulaire, dans lequel seul le groupe fermé de terminaux de radiocommunication mobile est autorisé à utiliser ces points d'accès, une cellule formant un tel point d'accès transmettant des données de cellules voisines à un terminal de radiocommunication mobile connecté au réseau de radiocommunication mobile dans cette cellule et/ou le terminal de radiocommunication mobile connecté au réseau de radiocommunication dans cette cellule effectue une recherche de cellules voisines pouvant être reçues à ce moment,
**caractérisé en ce**
- **que** les données des cellules voisines transmises et/ou reçues sont enregistrées au moins temporairement dans le terminal de radiocommunication mobile pour une recherche du point d'accès, et
- en ce qu'une recherche du point d'accès pour le groupe fermé n'est déclenchée que si le terminal de radiocommunication mobile se trouve dans la zone de couverture d'une ou plusieurs des cellules voisines enregistrées du point d'accès pour le groupe fermé,
- en ce que, en cas d'échec de la recherche du point d'accès pour le groupe fermé, le terminal de radiocommunication mobile effectue une nouvelle recherche du point d'accès si la position géographique du terminal de radiocommunication mobile dans la zone de couverture des cellules voisines du point d'accès a changé de manière significative par rapport à une position précédente.

2. Procédé selon la revendication 1, **caractérisé en ce qu'**une recherche de cellules voisines pouvant être reçues appropriées est effectuée par une cellule, notamment de manière répétée dans des intervalles de temps définissables, et **en ce que** les données de ces cellules voisines pouvant être reçues appropriées sont transmises à des terminaux de radiocommunication mobile du groupe fermé connectés dans la cellule.

3. Procédé selon l'une des revendications 1 ou 2, **caractérisé en ce qu'**une recherche de cellules voisines pouvant être reçues et appropriées est effectuée de manière répétée dans des intervalles de temps définissables par un terminal de radiocommunication mobile du groupe fermé, et **en ce que** les cellules appropriées, pouvant être reçues à ce moment sont enregistrées au moins temporairement comme cellules voisines dans le terminal de radiocommunication mobile.

4. Procédé selon l'une des revendications précédentes, **caractérisé en ce qu'**un changement de position géographique significatif du terminal de radiocommunication mobile est détecté par le fait qu'un changement de la valeur « timing advance » d'un procédé de multiplexage temporel, affectée au terminal de radiocommunication mobile par le point d'accès, est égal ou supérieur, notamment à l'intérieur d'un laps de temps défnissable, à une valeur définissable.

5. Procédé selon l'une des revendications précédentes, **caractérisé en ce qu'**un changement de position géographique significatif du terminal de radiocommunication mobile est détecté par le fait qu'un changement de la position absolue ou relative par rapport à la structure de trame d'informations omnidirectionnelles de cellules pouvant être reçues est égal ou supérieur, notamment à l'intérieur d'un laps de temps définissable, à une valeur définissable.

6. Procédé selon l'une des revendications précédentes, **caractérisé en ce qu'**un changement de position géographique significatif du terminal de radiocommunication mobile est détecté par le fait qu'un changement du niveau de réception et/ou une valeur moyennée correspondante du niveau de réception et/ou de la qualité du signal reçu et/ou une valeur moyennée correspondante de la qualité du signal reçu d'une ou plusieurs cellules pouvant être reçues est égal ou supérieur, notamment à l'intérieur d'un laps de temps définissable, à une valeur définissable.
